# EUROPEAN PATENT APPLICATION

(11) **EP 1 536 279 A2**
(43) Date of publication of application: **01.06.2005**
(21) Application number: 04027986.1
(22) Date of filing: 25.11.2004
(51) Int. Cl.: G03B 27/32, G03B 27/46

(54) **Recording material roll unit and apparatus for manufacture of recording material roll unit**

(30) Priority: 27.11.2003 JP 2003397962
(71) Applicant: Fuji Photo Film Co., Ltd., Kanagawa 250-0123 (JP)
(72) Inventor: Kaneko, Hiromi, Minami-ashigara-shi Kanagawa (JP); Tsujimura, Mikio, Minami-ashigara-shi Kanagawa (JP)
(74) Representative: HOFFMANN - EITLE

(57) **Abstract**

A recording paper roll unit (50) comprises plural recording paper rolls (22, 23) that are held by a common core (53). The recording paper rolls (22, 23) are covered with a light shielding sheet (51). When the core (53) is rotated, the recording papers (22a, 23a) are drawn out from the recording paper rolls (22, 23). Two images are recorded at a time by exposure to the recording papers (22a, 23a). When the recording papers (22a, 23a) have the same recording characteristics, the exposure condition of an exposure unit (21) becomes the same. When the recording papers (22a, 23a) have the same length, the recording paper rolls (22, 23) can be used up at the same time. When the recording papers (22a, 23a) have the same width, two images of the same size are recorded at the same time, and thus it is possible to increase the recording speed.

## Description

### BACKGROUND OF THE INVENTION

### 1. Field of the Invention

The present invention relates to a recording material roll unit having a sheet recording material that is wound around a core, and an apparatus for manufacturing such recording material roll unit.

### 2. Description of the Related Art

A well-known printer processor scans an image on a recording medium such as a photo film (a negative film and a reversal film, for example) photoelectrically to generate digital image data, and expose the image by modulating an intensity of recording light and irradiating the recording light on a photosensitive recording material. Then, the printer processor carries out developing and drying processes to the exposed recording material so that a print picture is formed. The printer processor has an advantage in improving the quality of the recorded image by image processing, such as color balance correction and sharpness correction, to the image data of the scanned image.

In terms of fastening the processing speed of the printer processor, recording plural images at the same time is preferable. In Japanese patent No. 3114718, for example, after two images are simultaneously exposed on a wide recording paper, the recording paper is cut along an advancing direction of the recording paper to have two print pictures. In addition, Japanese patent No. 3114718 describes a technique to produce two print picture at a time by shifting a cut recording paper in the widthwise direction perpendicular to the advancing direction and by recording two images on the cut recording papers arranged in the widthwise direction.

When the position of the recording paper is deviated in the widthwise direction, or when the recording paper is fed obliquely and cut into two pieces, the print picture may have an uneven blank around the image area. In addition, the image area in a single image may be separated by cutting a wide recording paper into two pieces. Moreover, the time for shifting every two recording paper in the widthwise direction makes it difficult to increase the processing speed of the printer processor.

In order to solve the above problems, an image exposure apparatus the printer processor described in Japanese Patent Laid-Open publication (JP-A) No. 11-95330 can load plural magazines to contain the recording paper roll in the widthwise direction. In addition, the printer processor described in JP-A No. 2001-56511 contains plural recording paper rolls in a single magazine. Since these printer processor can simultaneously draw plural recording papers from the recording paper rolls arranged in the widthwise direction, it is possible to increase the process capability.

In recording the images with plural recording paper rolls, however, an operator of the printer processor must load the recording paper roll individually. Especially, in loading a photosensitive recording paper, the operation to load the recording paper roll becomes more troublesome because of the necessity to load the recording paper roll in a light-tight condition.

In setting two recording paper rolls, for example, the recording paper of one recording paper roll may remain when the recording paper of the other recording paper roll is used up. In that case, it is troublesome to change the recording paper roll each time when the recording paper of either recording paper roll is used completely. Although the operator can change both recording paper rolls when one recording paper roll is used up, the remaining recording paper of the other recording paper roll becomes a waste. Moreover, if the recording characteristics of the recording paper are different according to the product lot, the printer processor has to carry out exposure correction to each of the recording papers to be recorded simultaneously. As a result, the manufacture cost of the exposure device of the printer processor increases.

The image exposure apparatus described in JP-A No. 11-95330 has plural magazines in the widthwise direction, so the apparatus becomes bigger and more expensive. Because of the thickness of the side wall of the magazine and because of the design of a magazine loading section, the image exposure apparatus must provide certain gap between the adjacent recording paper rolls. As a result, the exposure area of the image exposure apparatus needs to be longer, or the image exposure apparatus needs to have a paper shift device. So the image exposure apparatus becomes bigger and more expensive.

### SUMMARY OF THE INVENTION

An object of the present invention is to provide a recording material roll unit that can be loaded with an image recording apparatus easily.

Another object of the present invention is to provide a recording material roll unit that can use up the recording material effectively.

Further object of the present invention is to provide a recording material roll unit that can effectively decrease the size and the manufacture cost of the image recording apparatus.

Still further object of the present invention is to provide an apparatus for manufacturing such recording material roll unit.

To achieve the above objects, the recording material roll unit comprises plural recording material rolls that are integrated and arranged in a widthwise direction. The recording material rolls are formed by winding plural belt-shaped recording materials. The recording materials are wound around a single core.

The recording material may be wound around a second core provided for each recording material. In that case, the recording material roll unit is made by inserting a support shaft into the second core.

One of the recording materials may be wound around a third core. Then, the recording material roll unit is made by winding other recording material around at least one fourth core and by inserting a part of the third core into the fourth core.

The recording material roll unit may be formed by wining the recording materials around plural fifth cores and by adhering the fifth core to each other.

The recording materials for the recording material roll unit may have the same recording characteristics, the same length and/or the same width.

The side edges of the recording material rolls may be separated. In that case, a spacer is preferably provided for adjusting the gap between the recording material rolls.

In a preferred embodiment, the recording material is a photosensitive recording material. The recording materials are covered with a light shielding sheet. The leading end portions of the recording materials may be connected to the light shielding sheet.

The apparatus for manufacturing such recording material roll unit comprises a winding shaft to support the core and a winding section to rotate the winding shaft to wind the recording materials, arranged in parallel in a widthwise direction, around the core. The core has the length of about multiple of the width of the recording material. Between the winding section and a web cutter to cut a wide web into the recording materials, a separation section is provided for increasing the gap between the recording materials. The apparatus for manufacture the recording material roll unit may have plural rider rollers for pressing the peripheries of the recording material rolls that are supported by the winding shaft. At least one rider roller is provided for each of the recording paper rolls arranged in the widthwise direction.

According to the present invention, since plural recording material rolls are integrated and arranged in the widthwise direction, plural recording material rolls can be set in a printer with a single loading operation. The length of the recording materials are the same, it is possible to use up the recording materials at the same time. By use of the recording materials with the same recording characteristics, it is possible to set the same recording condition for the recording materials of the recording material roll unit. Since the recording materials have the same width, the printer can record plural images of the same size at a same time, so the recording speed increases. Moreover, by covering the peripheries of the recording material rolls with a light shielding sheet, an operator can set the recording material roll unit outside.

### BRIEF DESCRIPTION OF THE DRAWINGS

The above objects and advantages of the present invention will become easily understood by one of ordinary skill in the art when the following detailed description would be read in connection with the accompanying drawings, in which:
Fig. 1 is a schematic view of the structure of a printer processor;
Fig. 2 is a perspective view of an internal structure of a twin roll magazine;
Fig. 3 is an exploded perspective view of a recording paper roll unit;
Fig. 4 is a perspective view of the recording paper roll unit in which a front end portion of the recording paper is drawn out;
Fig. 5 is a plane view of the relationship in position between the recording paper rolls in the twin roll magazine and the recording paper rolls in single roll magazines;
Fig. 6 is a schematic perspective view of an apparatus to manufacture the recording paper roll unit;
Fig. 7 is an enlarged and partial view of the apparatus of Fig. 6;
Fig. 8 is a partial-cross section of an expander roll;
Fig. 9 is a perspective view of the printer section of the printer processor in which cut recording papers are supplied from the recording paper roll unit;
Fig. 10 is a perspective view of the printer section in which a spliced portion of the recording paper is detected;
Fig. 11A, 12A and 13A are exploded perspective views of embodiments of the recording paper roll unit;
Figs. 11B, 12B and 13B are perspective views of embodiments of the recording paper roll unit; and
Fig. 14 is an exploded perspective view of an embodiment of the recording paper roll unit.

### PREFERRED EMBODIMENTS OF THE INVENTION

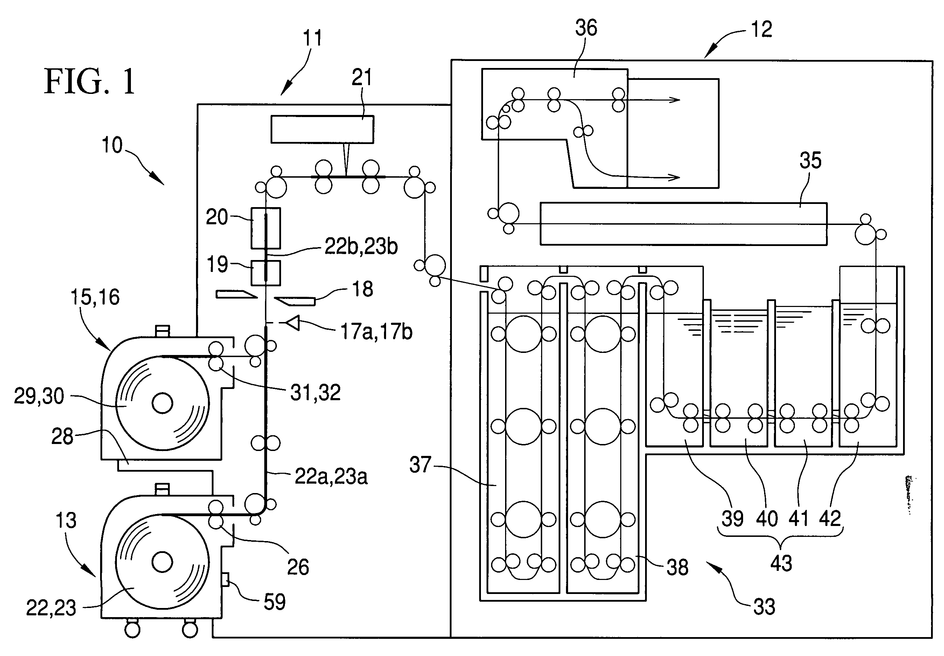

In Fig. 1, a printer processor capable of loading a recording paper roll unit according to the present invention is illustrated. The printer processor 10 is constituted by a printer section 11 and a processor section 12. The printer section 11 comprises a twin roll magazine 13, a pair of single roll magazines 15, 16, a pair of splice sensors 17a, 17b, a cutter device 18, a backside printer 19, a paper shift device 20 and an exposure unit 21.

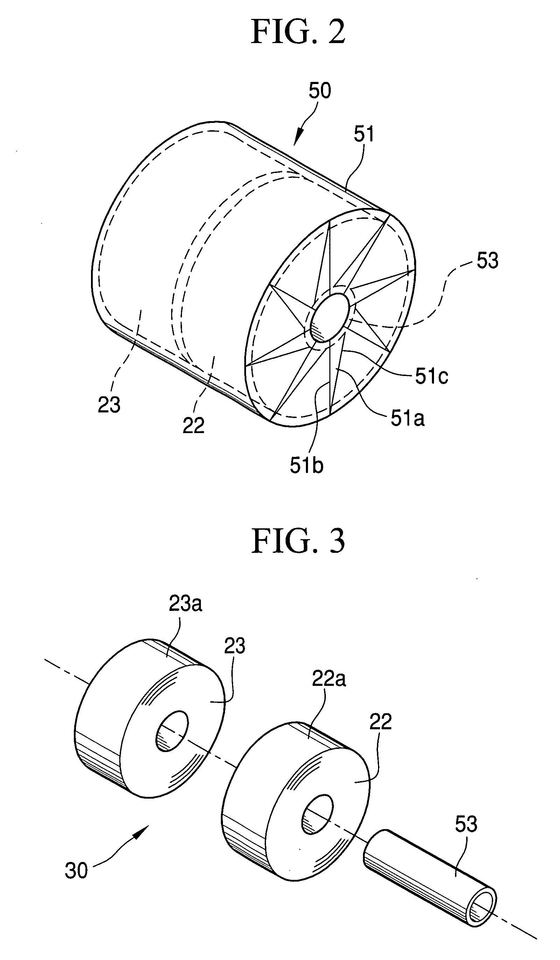

In the twin roll magazine 13, two recording paper rolls 22, 23 having rolled photosensitive recording papers 22a, 23a are contained as a recording paper roll unit 50 (see Fig. 2). When a feeding roller pair 26 provided with the twin roll magazine 13 rotates, the recording papers 22a, 23a are drawn out of the twin roll magazine 13. The cutter device 18 cuts the recording paper 22a, 23a into cut recording papers 22b, 23b having a predetermined length.

The single roll magazines 15, 16 are loaded on a stage 28 provided in the printer section 11. In the single roll magazines 15, 16, the recording paper rolls 29, 30 are respectively contained. The width of the recording papers for the recording paper rolls 29, 30 are different from each other. When feeding roller pairs 31, 32 are rotated, the leading end portions of the recording paper are pulled out of the single roll magazines 15, 16 and fed into the printer section 11. The cutter device 18 cuts the recording papers into the cut recording papers 22b, 23b.

The cut recording paper 22b, 23b is fed from the cutter device 18 to the backside printer 19. The backside printer 19 prints necessary information, such as a frame number and correction data, in a rear surface of the cut recording paper 22b, 23b. The paper shift device 20 has a shift roller that is slidable in a widthwise direction, perpendicular to the advancing direction of the cut recording sheet 22b, 23b, and shifts the cut recording papers 22b, 23b from the single roll magazines 15, 16 in the widthwise direction. The exposure unit 21 incorporates a well-known laser printer device. The exposure unit 21 irradiates laser beam according to image data stored in an internal image memory or sent from an image scanner (not illustrated) , so the latent image is exposed in the cut recording papers 22b, 23b.

The cut recording papers 22b, 23b after exposure of the image are advanced to the processor section 12. The processor section 12 comprises a development device 33, a dryer 35 and a sheet ejection device 36. In the development device 33, a develop tank 37, a breach/fixation tank 38 and washing tanks 43 are provided in this order listed from the upstream side with respect to the advancing direction (from the left side of the Fig. 1). The washing tanks 43 include a first washing tank 39, a second washing tank 40, a third washing tank 41 and a fourth washing tank 42. The develop tank 37 contains developing agent, and the breach/fixation tank 38 contains breach and fixation agent. In the first to fourth washing tank 39-42, washing agent is stored. While the cut recording papers 22, 23b are advanced from the develop tank 37 to the washing tanks 43 by feeding racks provided with each processing tanks 37-42, development, fixation and washing processes are carried out.

The dryer 35, located above the processing tanks 37-42, has a conveyor belt and an air blow duct. The air blow duct blows dried air that is heated by a heater, so the cut recording papers 22b, 23b are pressed toward the conveyor belt. By feeding the cut recording papers 22b, 23b while blowing dry air, the washing agent on the cut recording papers 22b, 23b is removed. The cut recording papers 22b, 23b through the drier 35 are fed to the sheet ejection device 36 in which the cut recording papers 22b, 23b are sorted in accordance with print sizes or print jobs and ejects the sorted cut recording papers 22b, 23b to a tray (not illustrated) provided with the processor section 12.

As shown in Figs. 2 and 3, the recording paper rolls 22, 23 are supported by a single core 53 to form a recording paper roll unit 50 that is loaded with the twin roll magazine 13. The recording paper roll unit 50 is covered with a light shielding sheet 51 for enabling outside loading of the recording paper roll unit 50. In the lateral sides of the recording paper rolls 22, 23, plural pleats 51a are folded to form (chrysanthemum-shaped) gathers. The ridgelines of the mountain folds 51b are longer than the ridgelines of the valley folds 51c. Moreover, the ridgelines of the mountain folds 51b tend toward the center axis of the core 53. Thereby, it is possible to decrease the size of the light shielding sheet 51 as well as keeping the recording paper rolls 22, 23 in light-tight and moisture-tight manner.

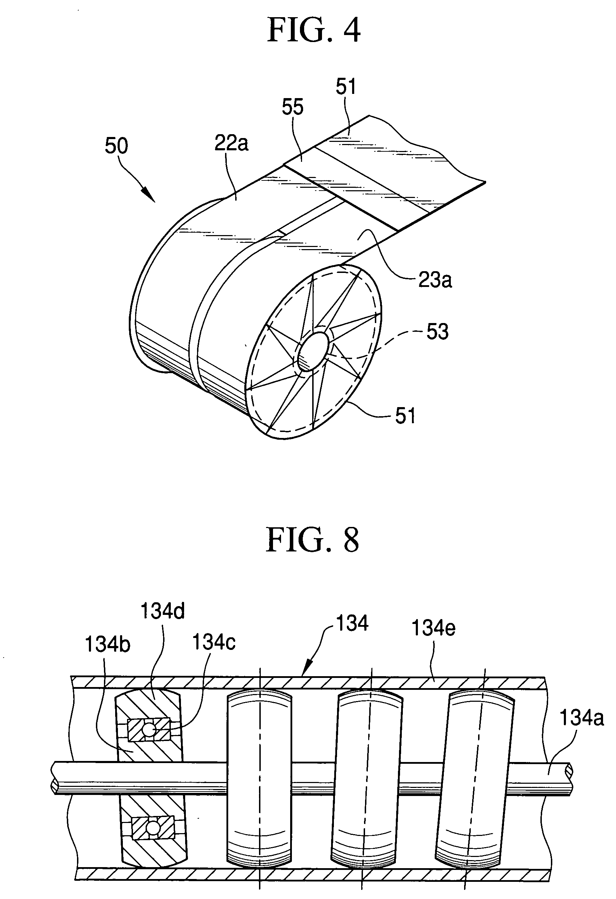

The recording paper roll unit 50 has the recording paper rolls 22, 23 and the core 53 to support the recording paper rolls 22, 23. The recording paper rolls 22, 23 are formed by winding the recording papers 22a, 23a that have the same width. When the core 53 is rotated, the recording paper rolls 22, 23 are also rotated simultaneously so that the recording papers 22a, 23a are drawn out from the recording rolls 22, 23, as shown in Fig. 4. The recording paper rolls 22, 23 are covered with the light shielding sheet 51. The front end portions of the recording papers 22a, 23a and the light shielding sheet 51 are adhered to each other in a connecting area 55. Thereby, when the recording papers 22a, 23a are initially advanced, the portion of the light shielding sheet 51 to cover the periphery of the recording paper rolls 22, 23 is torn away from the portion of the light shielding sheet 51 to cover the lateral side of the recording paper rolls 22, 23. The recording papers 22a, 23a and the portion of the light shielding sheet 51 to cover the periphery of the recording paper rolls 22, 23 are advanced out of the twin roll magazine 13.

Two recording paper rolls 22, 23 that constitute the recording paper roll unit 50 have the same recording characteristics. Note that the same recording characteristics means that the recording paper rolls 22, 23 have the same product lot (in other words, the recording papers 22a, 23a are formed from the same web), or the color balance value and the mean density value are 0.05 or less when the gray patch having the density of each color from 0.75 to 0.85 is printed in the recording papers 22a, 23a.

Referring to Fig. 1, an ID chip 59 is removably provided with the front surface of the twin roll magazine 13. The ID chip 59 stores various information such as the type of the recording paper, the width and the length of the recording paper, processing agents for the recording paper, the product lot of the emulsion and the expiry date. The information in the ID chip 59 is read out when the twin roll magazine 13 is loaded with the printer section 11. The information may be recorded in the ID chip 59 by electrically or optically readable format. The ID chip 59 may be a wireless tag. Since the recording property of the recording paper rolls 22, 23 are the same, the twin roll magazine 13 requires only one ID chip so that the manufacture cost for the twin roll magazine 13 decreases.

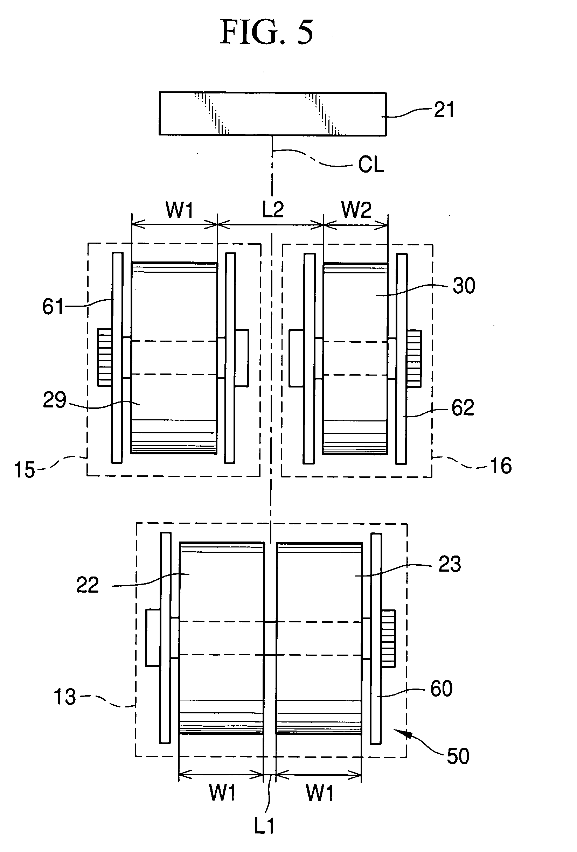

Referring to Fig. 5, the recording paper roll unit 50 in the twin roll magazine 13 is held by a holder 60 that comprises a support shaft and a pair of flanges. The single roll magazine 15, 16, located above the twin roll magazine 13, holds the recording paper rolls 29, 30 having different width. The recording paper rolls 29, 30 in the single roll magazines 15, 16 are respectively held by holders 61, 62 each of which comprises a shaft and a pair of flanges. In this embodiment, the width W1 of the recording paper rolls 22, 23 in the twin roll magazine 13 is the same as that of the recording paper roll 29 in one of the single roll magazine 15. For example, the width W1 is the print width of the king size (KG size) print (152mm). The width W2 of the recording paper roll 30 in the other single roll magazine 16 is the print width of the panorama size print.

When the recording paper roll unit 50 is loaded with the printer section 11, the recording paper rolls 22, 23 are symmetrical with respect to the center line CL of the exposure width of the exposure unit 21. The gap L1 between the side surfaces of the recording paper rolls 22, 23 is 50mm or less. In consideration of deviation in the position of the cut recording papers 22b, 23b in the widthwise direction while advancing the cut recording papers 22b, 23b, the gap L1 is preferably from 5mm to 15mm. Since there is no lateral wall of the magazine and the holder, the gap L1 between the recording paper rolls 22, 23 becomes smaller than the gap L2 between the recording paper rolls 29, 30 in the single roll magazines 15, 16.

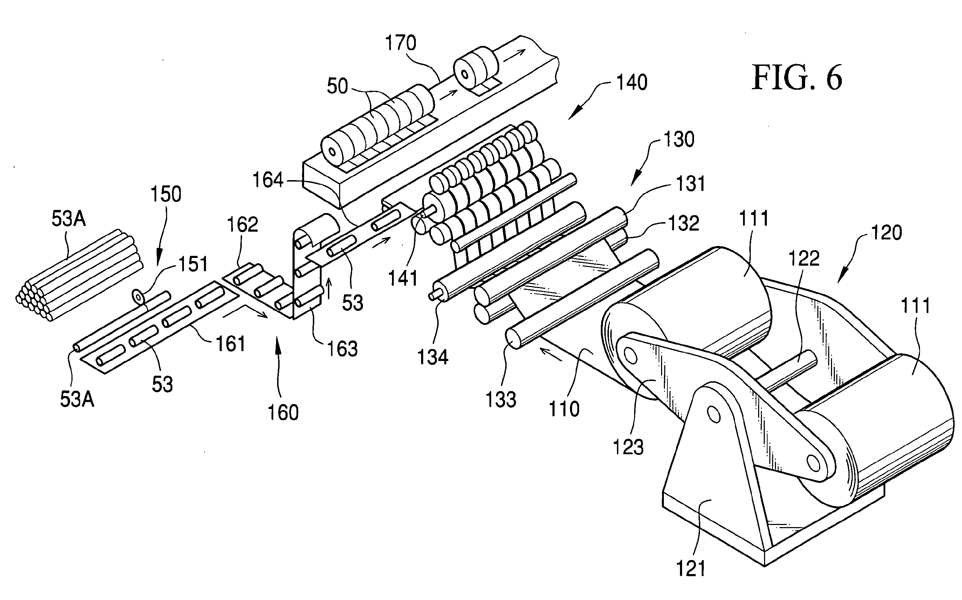

Referring to Fig. 6, an apparatus for manufacture of the recording paper roll unit 50 comprises a web supply machine 120, a web cutter 130, a web winding machine 140, a core cutter 150 and a core conveyor 160. The web supply machine 120 supports a couple of web rolls 111 formed by winding a wide web 110 as the photosensitive recording paper, and advances the wide web 110 toward the web cutter 130 by rotating a support shaft to hold the web roll 111. The web cutter 130 cuts the wide web 110 along the longitudinal direction of the wide web 110 to make plural narrow recording papers (long web) 112. The web winding machine 140 winds the recording paper 112 around the core 53. The core cutter 150 cuts a long core material 53A to produce the cores 53 having a predetermined length. The core conveyor 160 feeds the cores 53 to the web winding machine 140.

The web supply machine 120 has a base 121 and a roll holder 123 that is rotatable around a shaft 122. The web rolls 111 are rotatably held in both end portions of the roll holder 123. When one of the web rolls 111 at a web feeding position is completed, the web supply machine 120 rotates the web holder 123 to set the other web roll 111 at the web feeding position. Then, while the wide web 110 is supplied from the other web roll 111, new web roll 111 is loaded in the roll holder 123.

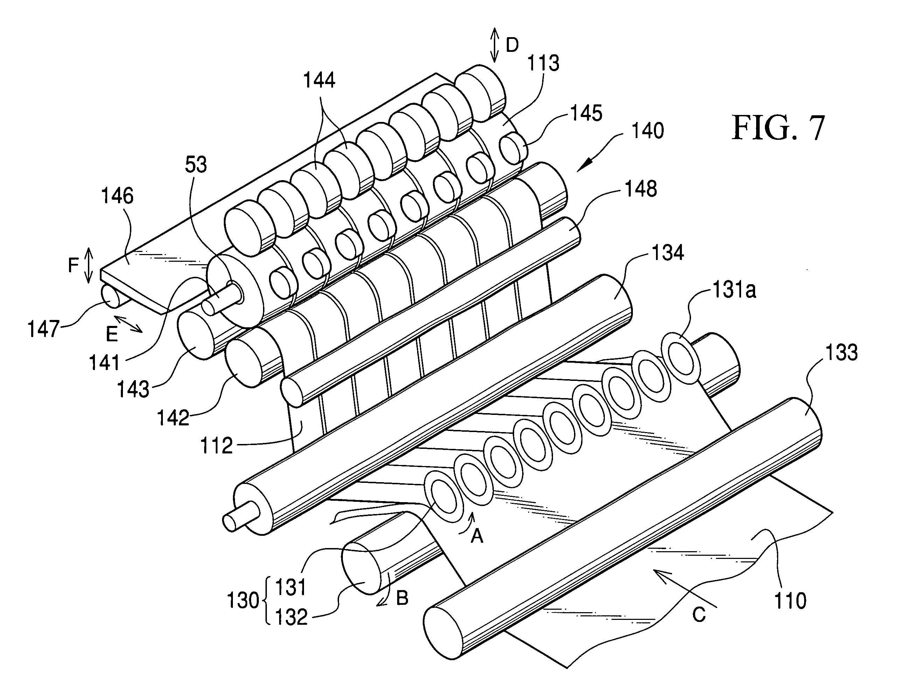

As shown in Fig. 7, the web cutter 130 comprises an upper blade assembly 131 and a lower blade assembly 132 that sandwich the wide web 110. The upper blade assembly 131 has plural upper blades 131a that are arranged in the widthwise direction of the wide web 110 at a predetermined interval. Although nine upper blades 131a are provided in Fig. 7, the number and the intervals of the upper blades 131a may be defined in accordance with the number and the width of the recording paper 112. The lower blade assembly 132 has the same structure of the upper blade assembly 131. Each of the lower blades of the lower blade assembly 132 comes in contact with each of the upper blades 131a. When the upper blade assembly 131 and the lower blade assembly 132 are respectively rotated in the directions A and B, the wide web 110 fed in the direction C is separated into plural (eight in Fig. 7) recording papers 112.

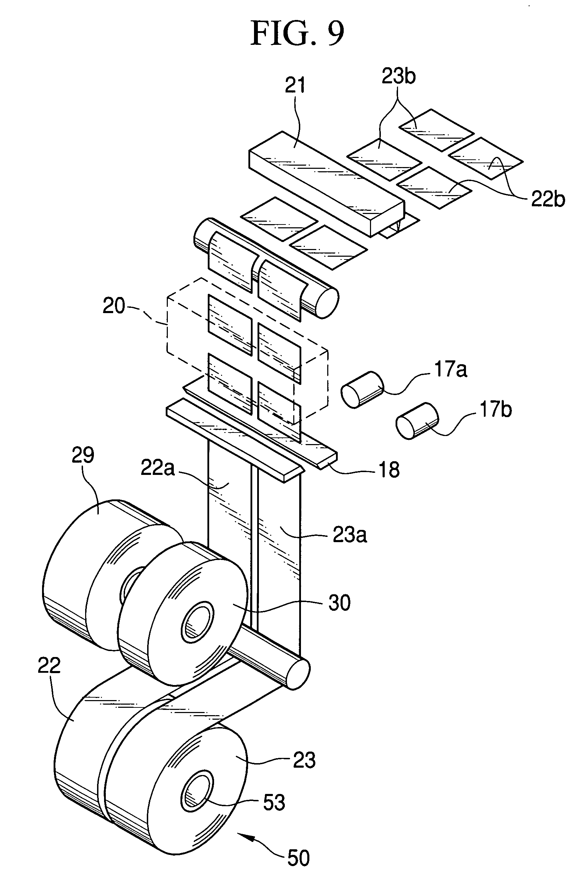

A pass roll 133 to supply extension to the wide web 110 and an expander roll 134 are provided in the upstream side and the downstream side of the upper blade assembly 131. In Fig. 8, the expander roll 134 has a main shaft 134a and a plurality of bosses 134b. The bosses 134b are fixed to the main shaft 134a. A collar 134d is rotatably around the boss 134b via a bearing 134c. The bosses 134b with the collars 134d are covered with an outer rubber 134e. The bosses 134b fixed to the center of the main shaft 134a have the common axis, and the axes of other bosses 134b are inclined to the axis of the main shaft 134a. The inclination of the axes of other bosses 134b increases as the distance from the boss 134 fixed to the center of the main shaft 134a.

The recording papers 112 are hanged around a portion of the expander roll 134 and advanced to the web winding machine 140. Since the bosses 134b and the collars 134d are inclined to the main shaft 134a, the recording papers 112 is shifted toward the lateral edges of the expander roll 134. As a result, the gap is generated between the adjacent recording papers 112 by the expander roll 134.

Referring to Fig. 7, the recording papers 112 are wound around the cores 53 by the web winding machine 140. In the web winding machine 140, a winding shaft 141 is located above a pair of surface drums 142, 143. The winding shaft 141 inserts the plural cores 53 (four in this embodiment). Each core 53 has the length enough for winding two recording papers 112.

In Fig. 6, the core 53 is produced in the core cutter 150 and supplied to the web winding machine 140 by the core conveyor 160. The core cutter 150, disposed near the web winding machine 140, sets a long pulp tube 53A as the core material. The core cutter 150 moves a rotary cutter 151 in the longitudinal direction of the pulp tube 53A and cuts the pulp tube 53A by a predetermined length, so the cores 53 are produced.

The core conveyor 160 to feed the cores 53 to the web winding machine 140 comprises a first horizontal conveyor 161, a second horizontal conveyor 162 that extends to the direction perpendicular to the first horizontal conveyor 161, a bucket conveyor 163 and a third horizontal conveyor 164. The cores 53 are rolled onto the first horizontal conveyor 161, for example, and then fed to the bucket conveyor 163 via the first and second conveyors 161, 162. The bucket conveyor 163 moves the cores 53 up to the level of the third horizontal conveyor 164. Then, the third horizontal conveyor 164 feeds the cores 53 to the position near the winding shaft 141 in which the cores 53 and the winding shaft 141 are coaxial.

The cores 53 are successively inserted in the winding shaft 141 by conveyor means (not illustrated). When a predetermined number (four in this embodiment) of the cores 53 are set in the winding shaft 141, the core conveyor 160 stops feeding the cores 53. The cores 53 are secured to the winding shaft 141 by chuck means (not illustrated).

The web winding machine 140 winds the recording papers 112 around the plural cores 53 that are fixed to the winding shaft 141, so the recording paper roll 113 is produced. In Fig. 7, the web winding machine 140 comprises the surface drums 142, 143, rider rollers 144, winding rollers 145, a winding table 146, a slide roller 147 and a nip roller 148.

The rider rollers 144 are arranged in the widthwise direction of the recording paper 112. Each of the rider rollers 144 is slidable in the direction D between a work position to press each of the recording paper rolls 113 and a non-press position that is away from the recording paper rolls 113. Each of the rider rollers 144 is connected to a pressure device having an air cylinder, for example, to press the periphery of the recording paper roll 113 at a predetermined pressure. The particulars of the pressure device are described in U.S. Patent No. 5,248,107, entitled "Web Winder for Winding up Web on Core and Method of Automatically Wrapping Leading End Portion of Web around Core", the details of which are herein incorporated by reference. Since plural rider rollers 144 are provided for each of the recording paper rolls 113, it is possible to press the recording paper rolls 113 at the predetermined pressure even when the diameters of the recording paper rolls are different during the process to wind the recording paper 112. As a result, the tightness of winding of the recording paper rolls 113 becomes the same. Although one rider roller 144 is provided for each of the recording papers 112 in Fig. 7, it is possible to increase the rider rollers 144 for each recording paper roll 113.

The winding rollers 145, arranged in the widthwise direction, press different recording paper rolls 113. Each winding roller 145 is rotatable around the core 53 by a predetermined angle from a winding start position to a winding end position. The winding rollers 145 are also moveable between the position to press the recording paper 112 and a non-press position that is away from the recording paper roll 113. The nip roller 148 is provided near the surface drum 142. While the leading end portion of the recording paper 112 is wound around the core 53, the recording paper 112 is held between the surface drum 142 and the nip roller 148.

Below the winding table 146, there is a guide rail (not illustrated) to support and guide the slide roller 147 in the direction E. The winding table 146 as well as the slide roller 147 is movable in the direction F. The winding table 146 is also utilized as a conveyor table for conveying the product after winding the recording paper 112 around the core 53.

The recording paper 112 is wound around the core 53 in the following steps. First, the leading end of the recording paper 112 from the web cutter 130 is advanced to the area above the winding table 146 through the surface drums 142, 143. Then, the winding table 146 and the slide roller 147 at initial positions are moved upward so that the leading end portion of the recording paper 112 is also moved upward by the winding table 146. When the winding table 146 finishes the movement, the slide roller 147 is slid in the direction E to push the recording paper 112 toward the core 53. Thereby, the leading end portion of the recording paper 112 is located above the core 53, and a portion successive of the leading end portion of the recording paper 112 is pressed onto the core 53.

Next, the rider rollers 144 are rotated and moved toward the core 53 to press the recording paper 112 onto the periphery of the core 53. The leading end portion of the recording paper 112 is thereby wound around the core 53, and the leading end-of the recording paper 112 reaches the winding end position. At that time, the nip roller 148 is moved to a position away from the surface drum 142 to release the recording paper 112.

The winding rollers 145 located at the non-press position move toward the core 53 and reach the winding start position to press the recording papers 112 onto the cores 53. The winding table 146 and the slide roller 147 are moved back to the initial position.

The winding rollers 145 is driven by rotary means (not illustrated), and is moved by about 45 degrees from the winding start position to the winding end position (to the leading edge of the recording paper 112) along the periphery of the core 53. Thereby, the recording paper 112 is wound around the core 53 without folding the leading end portion of the recording paper 112. The resistance of rotation of the winding roller 145 is small enough to rotate during the movement around the core 53. In addition, the winding rollers 145 are located at positions not to interfere the movement of other mechanical parts near the core 53. After the leading end portion of the recording paper 112 is wound around the core 53, the surface drums 142, 143 and the rider roller 144 start rotating to rotate the core 53 so that the recording paper 112 is wound around the core 53. At that time, the winding rollers 145 is away from the recording papers 112.

The recording paper 112 to be wound around the core 53 has a predetermined length by a cutter device (not illustrated). After winding the whole recording paper 112 completely, the surface drums 142, 143 and the winding shaft 141 stop rotating. Then, the recording paper roll units 50 having the recording papers 112 are ejected from the winding shaft 141 and sent to a conveyor 170 via the winding table 146. The recording paper roll units 50 are conveyed on the conveyor 170 and subject to wrapping process, for example.

With reference to Fig. 9, the steps to print images by use of the recording paper roll unit 50 are described. In changing the recording paper roll unit 50, the operator of the printer processor 10 ejects the twin roll magazine 13 from the printer processor 10. After loading new recording paper roll unit 50 in the twin roll magazine 13, the operator sets the twin roll magazine 13 in the printer processor 10. Since the recording paper roll unit 50 is covered with the light shielding sheet 51, the operator can set the recording paper roll unit 50 outside. Moreover, enabling to change two recording paper rolls 22, 23 by a single operation can reduce the burden to the operator.

After setting the recording paper roll unit 50, the feeding roller pair 26 is rotated to feed the leading end portions of the recording papers 22a, 23a and the light shielding sheet 51 to the printer section 11. Such leading end portions are not suitable for recording, so the leading end portions as well as the light shielding sheet 51 are cut and not used for image recording. When the twin roll magazine 13 is loaded, the printer section 11 reads information in the ID chip 59 and sets the exposure condition. Since the recording paper rolls 22, 23 of the recording paper roll unit 50 has the same recording characteristics, the printer section 11 can set the same exposure condition.

Moreover, in calibrating the exposure unit 21, either one of the recording papers 22a, 23a having the same recording characteristics is used. As a result, since calibration for both recording paper rolls 22a, 23a is not required, it is possible to carry out calibration effectively and quickly.

The recording papers 22a, 23a drawn out from the recording paper rolls 22, 23 are cut by the cutter device 18 into the cut recording papers 22b, 23b having a predetermined length (102mm of the longitudinal length of the king size print, for example). The cut recording papers 22b, 23b are further advanced to the recording unit 21, and then latent images are simultaneously exposed to the cut recording papers 22b, 23b. Since two images are recorded at a same time, the processing speed of the printer section 11 increases. Moreover, since the recording papers 22a, 23a have the same length, the recording paper rolls 22, 23 are used up at the same time. Thus, it is possible to save the waste and reduce the burden to the operator.

When the cut recording papers 22b, 23b are advanced in parallel, recording the same image in the cut recording papers 22b, 23b enables so-called double print (two sets of printing) in a short period. In that case, in discharging the developed print pictures, the sheet ejection machine 36 may eject the bunch of print pictures for each set individually instead of combining the cut recording papers 22b, 23b.

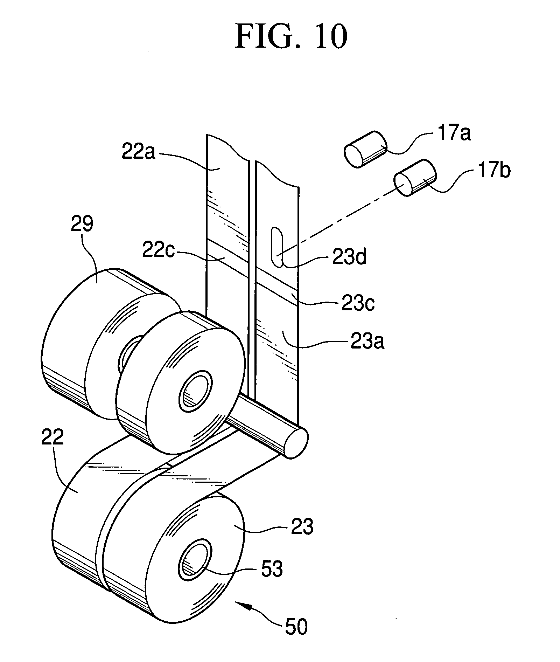

Referring to Fig. 10, some of the recording paper rolls 22, 23 have spliced portions 22c, 23c to connect the end of the recording papers 22a, 23a. The recording paper rolls 22, 23 of the recording paper roll unit 50 have the same product ID (or the same length), the spliced portions 22c, 23c appears at the same timing. Since both of the spliced portions 22c, 23c are detected by driving one splice sensor 17b to detect a splice hole 23d formed in one recording paper roll 23, it is not necessary to form a splice hole in the other recording paper roll 22. If the printer processor 10 is exclusive for the twin roll magazine 13, the other splice sensor 17a is not necessary, so the manufacture cost of the printer processor 10 is reduced.

With the recording paper roll unit 50 according to the present embodiment, a test to record the image is carried out. The recording paper for the recording paper roll unit 50 is the "sample 100" disclosed in the embodiment of JP-A No. 2003-307821. The recording paper roll unit 50 is manufactured and set in the printer processor. Then, same images are recorded to the cut recording papers 22c, 23c that are advanced in parallel. The characteristics of the print pictures, such as the density and the color balance, are the same. In addition, the recording paper rolls 22, 23 are used up at the same timing. The same results are obtained with the recording paper that is disclosed as the "sample 207" of JP-A No. 2003-307821.

In the above embodiment, the recording paper roll units are manufactured by use of the web cutter 130. The recording paper roll units may be manufactured by setting the recording paper rolls with the same recording characteristics or the same product ID in a re-winding machine, and by winding the recording papers again around a single core.

According to the above embodiment, the recording papers are wound by use of the surface drums and rider rollers, but the configuration of the web winding machine is not limited to this embodiment. For instance, the web winding machine may be the center winding type.

In the above embodiment, the recording paper roll unit 50 covered with the light shielding sheet 51 is set in the twin roll magazine 13 outside, but the operator may keep the recording paper roll unit 50 in a light tight manner in loading the recording paper roll unit 50. In that case, the recording paper roll unit 50 is covered with a dark bag or in a dark room while the operator loads the recording paper roll unit 50. The number of the recording paper rolls is not limited to two, but the recording paper roll unit may have more than two recording paper rolls.

Although the recording paper rolls 22, 23 of the recording paper roll unit 50 has the same product ID in the above embodiment, the recording paper rolls with different product ID may be used to manufacture the recording paper roll unit as long as the recording papers have the same recording characteristics.

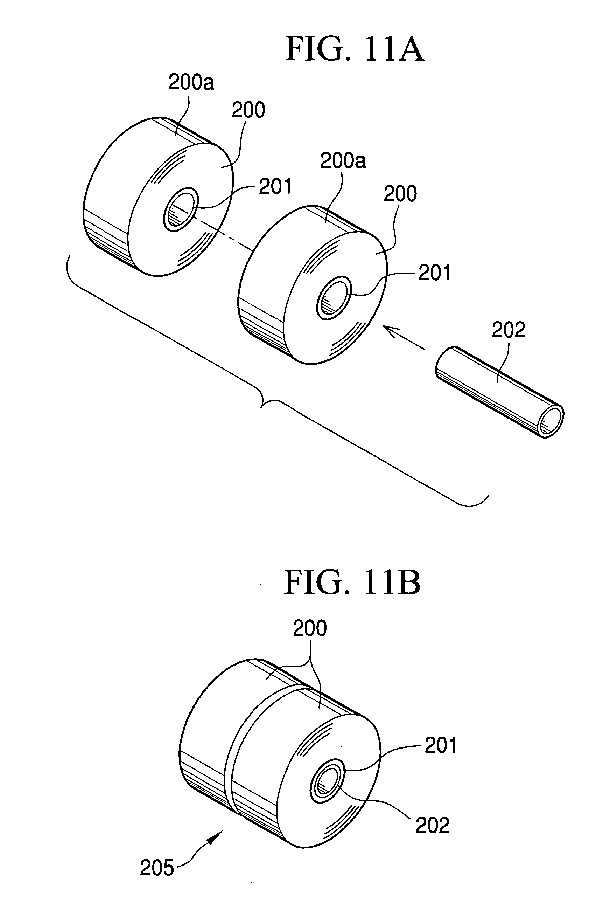

In the above embodiment, the recording paper roll unit is manufactured by winding plural recording papers around a single core. But the recording paper roll unit may be manufactured by other processes. For instance, as shown in Figs. 11A and 11B, a recording paper roll unit 205 may have two recording paper rolls 200 each of which has a recording paper 200a wound around a core 201. The recording paper rolls 200 are integrated by inserting the cores 201 into a common support shaft 202, so the recording paper roll unit 205 is manufactured.

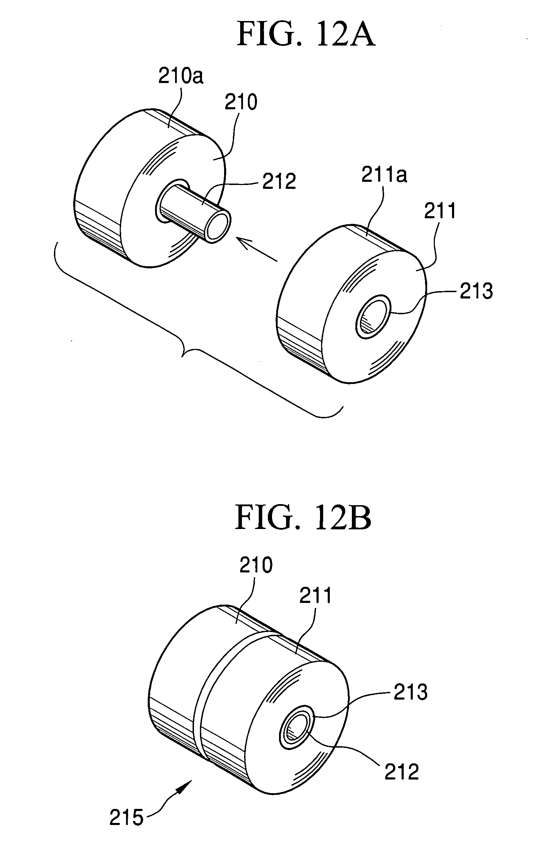

As shown in Figs. 12A and 12B, a step core 212 having a large tube portion and a small tube portion may be used to manufacture a recording paper roll unit 215. A recording paper roll 210 is formed by winding a recording paper 210a around the large tube portion of the step core 212. Then, the recording paper rolls 210 are integrated by inserting a core 213 of a recording paper roll 211 into the small tube portion of the step core 212, so the recording paper roll unit 215 is manufactured.

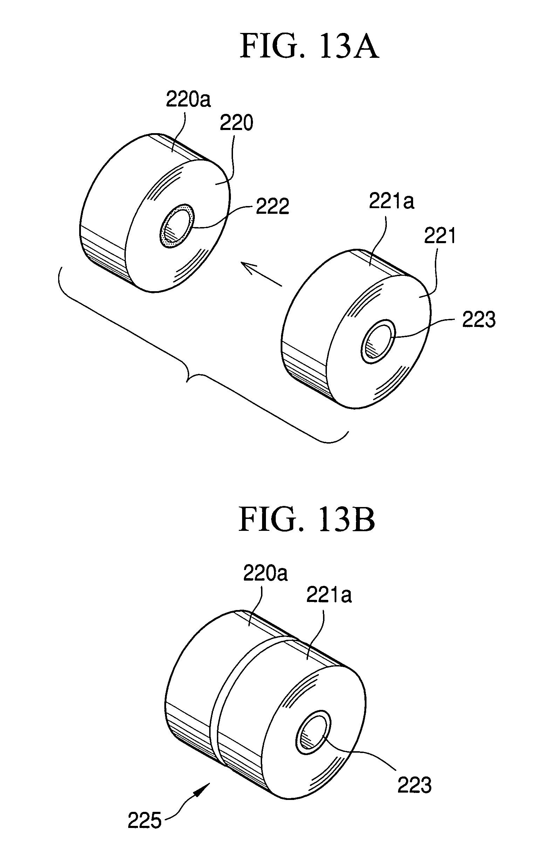

In Figs. 13A and 13B, a recording paper roll unit 225 may have two recording paper rolls 220, 221 each of which has a recording paper 220a, 221a wound around a core 222, 223. The cores 222, 223 are adhered to each other by adhesion means such as an adhesive and a tape, so the recording paper rolls 200 are integrated with each other to manufacture the recording paper roll unit 225.

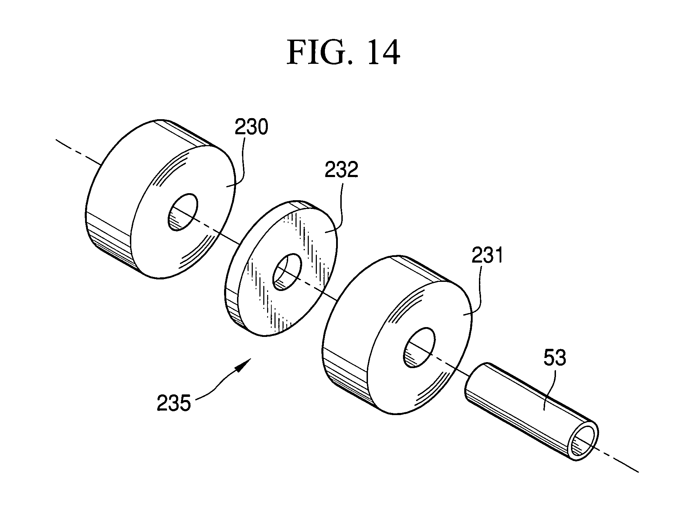

As shown in Fig. 14, a spacer 232 may be provided between a pair of recording paper rolls 230, 231 to constitute a recording paper roll unit 235. The gap L1 between the recording paper rolls 230, 231 is adjusted by changing the width of the spacer 232 in accordance with the performance of the paper feeding devices in the printer section 11 and the processor section 12.

In the above embodiment, the recording paper has the width of the king size print (152mm), but not limited to this size. For example, the width of the recording paper may be the width of the L size print (127mm).

The recording paper roll unit may be applicable to other type of the printer as well as the printer processor. The recording paper roll unit may be used in printers to record images and/or characters in a rolled recording paper. For instance, the present invention is applicable to a thermosensitive printer, a thermal transfer printer and an inkjet printer. In addition, the present invention is applicable to any kinds of sheet recording materials as long as images and/or characters are recorded in the material.

Various changes and modifications are possible in the present invention and may be understood to be within the scope of the present invention.

## Claims

1. A recording material roll unit (50, 205, 215, 225, 235) **characterized by** comprising plural recording material rolls (22, 23, 200, 210, 211, 220, 221, 230, 231) formed by winding plural belt-shaped recording materials (22a, 23a, 200a, 210a, 211a, 220a, 221a, 230a, 231a), the recording material rolls (22, 23, 200, 210, 211, 220, 221, 230, 231) being integrated and arranged in a widthwise direction.

2. The recording material roll unit (50) according to claim 1, **characterized by** comprising a single first core (53) for winding the recording materials (22a, 23a).

3. The recording material roll unit (205) according to claim 1, **characterized by** comprising:
second cores (201) for winding the recording materials (200a); and
a support shaft (202) that inserts the second cores (201), thereby the recording material rolls (200) are integrated.

4. The recording material roll unit (215) according to claim 1, **characterized by** comprising:
a third core (212) for winding one of the recording materials (210a); and
at least one fourth core (213) for winding other recording material (211a), a part of the third core (212) inserting in the fourth core (213).

5. The recording material roll unit (225) according to claim 1, **characterized by** comprising plural fifth cores (223) for winding the recording materials (20a, 221a), the fifth cores (223) being adhered to each other.

6. The recording material roll unit (50, 205, 215, 225, 235) according to claim 1, **characterized in that** the recording materials (22a, 23a, 200a, 210a, 211a, 220a, 221a, 230a, 231a) have the same recording characteristics.

7. The recording material roll unit (50, 205, 215, 225, 235) according to claim 1, **characterized in that** the recording materials (22a, 23a, 200a, 210a, 211a, 220a, 221a, 230a, 231a) have the same length.

8. The recording material roll unit (50, 205, 215, 225, 235) according to claim 1, **characterized in that** the recording materials (22a, 23a, 200a, 210a, 211a, 220a, 221a, 230a, 231a) have the same width.

9. The recording material roll unit (50, 205, 215, 225, 235) according to claim 1, **characterized in that** the recording material rolls (22, 23, 200, 210, 211, 220, 221, 230, 231) are separated.

10. The recording material roll unit (50, 205, 215, 225, 235) according to claim 9, **characterized by** comprising a spacer (232) for adjusting the gap between the recording material rolls (22, 23, 200, 210, 211, 220, 221, 230, 231).

11. The recording material roll unit (50, 205, 215, 225, 235) according to claim 1, **characterized in that** the recording material (22a, 23a, 200a, 210a, 211a, 220a, 221a, 230a, 231a) is a photosensitive recording material.

12. The recording material roll unit (50, 205, 215, 225, 235) according to claim 11, **characterized by** comprising a light shielding sheet (51) for covering the recording material rolls (22, 23, 200, 210, 211, 220, 221, 230, 231).

13. The recording material roll unit (50, 205, 215, 225, 235) according to claim 12, **characterized in that** the light shielding sheet (51) is connected to leading end portions of the recording materials (22a, 23a, 200a, 210a, 211a, 220a, 221a, 230a, 231a).

14. An apparatus for manufacture of a recording material roll unit (50, 205, 215, 225, 235) in which plural recording material rolls (22, 23, 200, 210, 211, 220, 221, 230, 231) are supported by a core (53, 201, 212, 213, 222, 223), the recording material roll (22, 23, 200, 210, 211, 220, 221, 230, 231) being formed by winding a belt-shaped recording material (22a, 23a, 200a, 210a, 211a, 220a, 221a, 230a, 231a), the apparatus **characterized by** comprising:
a winding shaft (141) that supports the core (53, 201, 212, 213, 222, 223), the length of the core (53, 201, 212, 213, 222, 223) being about multiple of the width of the recording material (22a, 23a, 200a, 210a, 211a, 220a, 221a, 230a, 231a); and
a winding section (140) to rotate the winding shaft (141) to wind the recording materials (22a, 23a, 200a, 210a, 211a, 220a, 221a, 230a, 231a) around the core (53, 201, 212, 213, 222, 223), the recording materials (22a, 23a, 200a, 210a, 211a, 220a, 221a, 230a, 231a) being arranged in parallel in a widthwise direction.

15. The apparatus for manufacture according to claim 14, **characterized by** comprising:
a web cutter (130) to cut a wide web (110) into the recording materials (22a, 23a, 200a, 210a, 211a, 220a, 221a, 230a, 231a); and
a separation section (134) provided between the web cutter (130) and the winding section (140) for increasing the gap between the recording materials (22a, 23a, 200a, 210a, 211a, 220a, 221a, 230a, 231a).

16. The apparatus for manufacture according to claim 14, **characterized by** comprising plural rider rollers (144) for pressing the peripheries of the recording material rolls (22, 23, 200, 210, 211, 220, 221, 230, 231) that are supported by the winding shaft (141), at least one rider roller (144) being provided for each of the recording paper rolls (22, 23, 200, 210, 211, 220, 221, 230, 231) arranged in the widthwise direction.
